# FASCICULE DE BREVET EUROPEEN

(11) **EP 0 955 154 B1**
(45) Date de publication et mention de la délivrance du brevet: **26.03.2003**
(21) Numéro de dépôt: 99108401.3
(22) Date de dépôt: 29.04.1999
(51) Int. Cl.: B29D 30/54, B24B 5/36

(54) **Machine de rechapage de pneumatiques**
Reifenrunderneuerungsvorrichtung
Tyre retreading apparatus.

(30) Priorité: 05.05.1998 FR 9805993
(43) Date de publication de la demande: 10.11.1999
(73) Titulaire: RECAMIC S.A., 1762 Givisiez (CH)
(72) Inventeur: Andersson, Thomas, 43010 Tvaaker (SE); Reppel, Emil Willi, 31142 Falkenberg (SE)
(74) Mandataire: Dequire, Philippe Jean-Marie Denis

(56) Documents cités:
- EP-A- 0 704 296
- AU-A- 1 528 470
- DE-A- 1 779 386
- US-A- 3 331 412
- US-A- 3 867 792
- US-A- 3 930 529
- US-A- 4 036 677
- US-A- 4 490 197
- US-A- 5 256 445

## Description

La présente invention a pour objet une machine destinée au rechapage de pneumatiques ; l'invention concerne plus particulièrement une râpeuse ainsi qu'une machine combinée comportant en plus des organes d'application et de rouletage des bandes de roulement.

On sait que la plupart des pneumatiques peuvent être rechapés, c'est-à-dire qu'il est possible - après l'usure normale de la bande de roulement - de remplacer cette bande, et même certaines nappes de renfort de la ceinture du pneumatique. Ces opérations sont très courantes pour les pneumatiques de poids lourds ; elles peuvent s'effectuer dans de véritables usines, ou dans des ateliers plus ou moins importants.

De nombreuses machines destinées à enlever les restes de la bande de roulement des pneumatiques usées, opération de « déchapage » ont été proposées. Parmi celles-ci beaucoup utilisent une râpe pour effectuer ce déchapage. Une telle râpe est constituée par une série de lames comportant sur l'extérieur des dents agressives et disposées côte à côte. Une telle machine est divulguée dans le brevet US 4 116 256. Ces machines comportent souvent des réglages complexes pour permettre d'obtenir toute la diversité des profils de râpage nécessaires.

On a aussi imaginé des machines plus ou moins complexes permettant de réduire les différentes opérations de déchapage ou râpage et de rechapage, sans recourir à des réglages ou à des entretiens trop fréquents. Par exemple, les brevets US 4 036 677 et FR 2 271 037, basés sur une priorité italienne du 14 mai 1974, décrivent une machine « à tout faire » comprenant un mandrin rotatif sur lequel est monté le pneumatique à déchaper-rechaper, des outils de râpage de la carcasse, un expanseur radial coaxial avec le mandrin, qui amène la nouvelle bande de roulement sous forme d'un anneau autour de la carcasse, et des organes de rouletage pour faire adhérer la nouvelle bande sur la carcasse.

Le pneumatique traité reste sur le même mandrin pendant le râpage et l'habillage, c'est-à-dire l'application de la nouvelle bande de roulement, mais sans aucune interaction des différentes parties de la machine, ce qui entraîne une redondance des unités motrices, et la nécessité de repérer plusieurs fois les positions respectives de la carcasse et de la bande de roulement du pneumatique au cours des opérations successives.

La nouvelle bande de roulement peut aussi être coupée à la longueur voulue et posée en continu sur la carcasse puis aboutée, c'est-à-dire que ses deux extrémités une fois jointives sont soudées ; une machine de ce type est décrite dans le brevet EP 0 704 296, mais cette machine n'effectue que l'application sur le pneumatique de la nouvelle bande de roulement, opération appelée « l'habillage ».

Le document AU 15284/70 présente une machine correspondant au préambule de la revendication 1.

Suivant l'invention, une machine destinée au rechapage de pneumatiques comprend un premier chariot guidé dans des premiers rails et mu par un premier moteur, un mandrin rotatif monté sur ledit premier chariot, un second chariot guidé dans des seconds rails horizontaux orientés parallèlement à l'axe de rotation dudit mandrin et perpendiculairement audits premiers rails, ledit second chariot étant mu par un second moteur, des outils de râpage portés par ledit second chariot, et des moyens pour positionner avec précision le premier chariot relativement au second chariot seulement par la combinaison des deux mouvements de translation desdits premier et second chariots. Cette machine est caractérisée en ce que lesdits premiers rails sont verticaux, en ce que ledit second chariot est disposé au-dessus dudit premier chariot et en ce que ladite machine comporte en plus, portés par ledit second chariot, des organes d'application d'une bande de roulement et des organes de rouletage de ladite bande de roulement après son application.

Une telle machine permet, par la combinaison de deux mouvements simples de translation d'obtenir les profils de râpage de la surface du sommet d'un pneumatique. Le fait que tout déplacement relatif entre l'axe de rotation du mandrin et le centre des outils de râpage est contenu dans un plan unique passant par l'axe de rotation du mandrin a l'avantage de simplifier remarquablement l'interprétation de chaque déplacement puisque tout rapprochement, par exemple de cinq millimètres va correspondre à une diminution du rayon du pneumatique strictement aussi égal à cinq millimètres. On peut ainsi relier directement tout déplacement relatif à une épaisseur de gomme à retirer.

D'autre part, la disposition des outils de râpage au-dessus du pneumatique permet un gain de place au sol remarquable.

Cette machine permet ainsi d'associer tous les organes nécessaires au déchapage et à l'habillage d'un pneumatique usé avec un très faible encombrement au sol. L'utilisation du même chariot pour déplacer les outils de râpage ainsi que les organes d'application et de rouletage de la nouvelle bande de roulement permet aussi d'utiliser les mêmes repérages pour toutes les opérations du rechapage, il n'est pas nécessaire d'utiliser de moyens de mesure complémentaires.

De préférence, la machine comprend aussi des moyens pour découpler la position des organes d'application et de rouletage du mouvement dudit second chariot. Cela permet, notamment, de disposer les outils de râpage axialement à l'écart du pneumatique pendant les opérations d'habillage. Cela est très important pour garantir qu'il n'y aura pas de pollution de la surface du pneumatique par exemple lors des opérations usuelles de gommage, de mise en place de la gomme de liaison ou l'application de la nouvelle bande de roulement. Une telle pollution par des particules qui se détacheraient des lames de la râpe serait inacceptable.

Selon une caractéristique complémentaire, la machine selon l'invention comporte des moyens pour inverser le sens de rotation des outils de râpage. Elle peut aussi comporter des moyens complémentaires pour paramétrer le nombre de pneumatiques traités au-delà duquel le sens de rotation des outils de râpage est inversé.

Cette caractéristique a l'avantage d'optimiser l'usure des outils de râpage et de simplifier l'utilisation de la machine. En effet, il est bien connu que les lames d'une râpe s'usent de façon irrégulière en fonctionnement. En conséquence, sur les machines connues, après avoir déchapé un nombre de pneumatiques donné, de l'ordre de 15 à 20, on démonte usuellement les lames de la râpe, on les tourne de 180° et on les remonte. Cette opération est particulièrement fastidieuse. La machine selon l'invention permet d'effectuer cela par une simple inversion du sens de rotation de la râpe, tous les trois à dix pneumatiques traités par exemple et de façon automatique.

Dans le cas où la machine selon l'invention ne doit traiter que des pneumatiques rechapés au moyen de bandes de roulement plates, l'axe de rotation de la râpe peut être parallèle à l'axe de rotation du mandrin. Dans ce cas, il est avantageux d'effectuer automatiquement une inversion du sens de rotation de la machine en même temps que l'on inverse le sens de rotation de la râpe. Bien entendu, les sens de rotation du pneumatique et de la râpe sont identiques pour assurer une vitesse tangentielle dans la zone de contact maximale.

Lorsque cette machine doit aussi déchaper des pneumatiques devant recevoir des bandes comportant des ailes effilées, usuellement appelées « bandes à bavettes », ces aies devant recouvrir les épaules et le haut des flancs des pneumatiques, il est avantageux d'avoir le sens de rotation de la râpe perpendiculaire à l'axe de rotation du mandrin.

Cette disposition a l'avantage de permettre de traiter toutes les parties du sommet et des épaules des pneumatiques par simple combinaison des deux mouvements vertical du mandrin et horizontal des outils de râpage de façon très simple. Dans ce cas, il n'est pas nécessaire d'inverser le sens de rotation du mandrin du pneumatique lorsque l'on inverse le sens de rotation des outils de râpage.

L'invention a encore pour objet une machine destinée au rechapage de pneumatiques comprenant un mandrin rotatif sur lequel est monté le pneumatique à traiter, des organes d'application d'une bande de roulement et des organes de rouletage de ladite bande de roulement après son application, caractérisée en ce que le mandrin est monté sur un premier chariot guidé dans des rails verticaux et mu par un premier moteur, en ce que les organes d'application d'une bande de roulement et les organes de rouletage de ladite bande de roulement après son application sont portés par un second chariot guidé dans des rails horizontaux orientés parallèlement à l'axe de rotation dudit mandrin et mu par un second moteur et en ce que des moyens sont prévus pour positionner avec précision le premier chariot relativement au second chariot.

On va décrire en détail un exemple de réalisation de l'invention, donné à titre non limitatif, en se référant au dessin annexé, sur lequel:
- la figure 1 est une vue en coupe verticale d'une machine de déchapage-rechapage conforme à l'invention ;
- la figure 2 est une vue en coupe verticale de côté de la même machine ;
- la figure 3 est une vue en coupe à plus grande échelle des organes d'application et de rouletage de la nouvelle bande de roulement ; et
- la figure 4 est une vue similaire à la figure 1 d'une variante de réalisation.

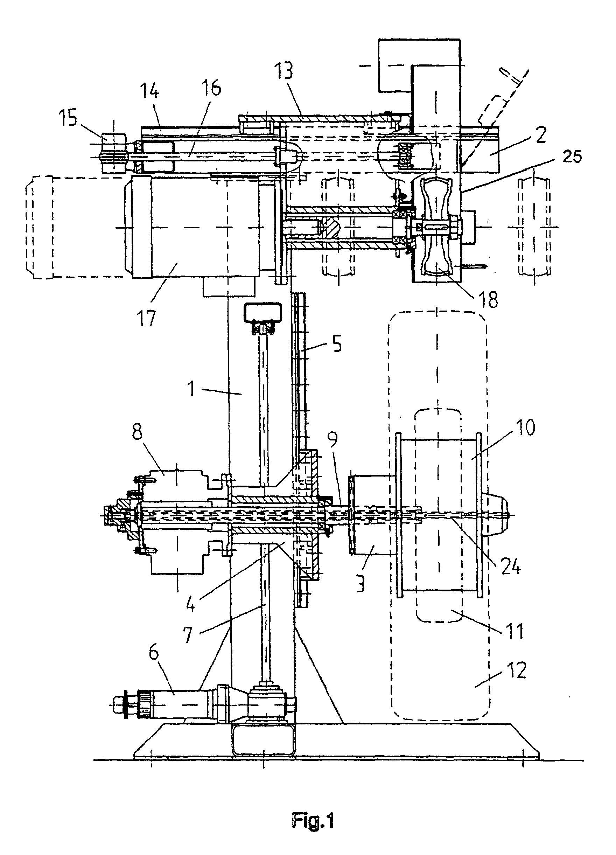

Les figures 1 à 3 présentent une machine de déchapage-rechapage selon l'invention. Cette machine comporte à la fois des outils de râpage et des organes d'application et de rouletage d'une nouvelle bande de roulement. Une telle machine est destinée à de petits ateliers pour lesquels la combinaison des opérations de râpage et d'habillage sur le même poste de travail entraîne un gain de place et de temps. En revanche, pour des ateliers plus importants, il est avantageux d'avoir deux machines, une première avec des outils de râpage et une seconde avec des organes d'application et rouletage d'une nouvelle bande de roulement. Dans ce deuxième cas, ces deux machines peuvent avoir des bâtis et des organes de commande identiques, tels que décrits dans ce qui suit.

Comme on le voit sur la figure 1, la machine de déchapage-rechapage comprend un bâti rigide vertical 1 et une potence horizontale 2. Conformément à l'invention, un mandrin 3 est monté sur un chariot 4 guidé dans des rails verticaux 5 et mu par un moteur pas à pas 6 et une vis sans fin 7. Le chariot 4 porte un moteur 8 monté sur le même arbre 9 que le mandrin 3 pour pouvoir l'entraîner en rotation.

On voit sur le dessin que le mandrin 3 comporte une jante extensible 10 permettant le montage de pneumatiques 11 ou 12 (en traits pointillés) de dimensions très différentes, allant du tourisme aux poids lourds.

A la partie supérieure la la machine, sur la potence 2, est monte un second chariot 13 guidé dans des rails horizontaux 14 et mu par un moteur pas à pas 15 et une vis sans fin 16. Le chariot 13 porte un moteur 17 pour actionner les outils 18 de râpage.

A la figure 1, les outils de râpage 18 sont disposés au-dessus du pneumatique à traiter. On voit aussi, en trait pointillé, les positions extrêmes que peuvent prendre le moteur 17 et les outils 18 grâce au chariot 13. L'amplitude du mouvement du chariot permet, lorsque la phase de déchapage ou râpage du pneumatique est achevée, d'escamoter les outils de râpage 18 et ainsi d'éviter toute pollution de la surface traitée du pneumatique pendant les phases suivantes du rechapage.

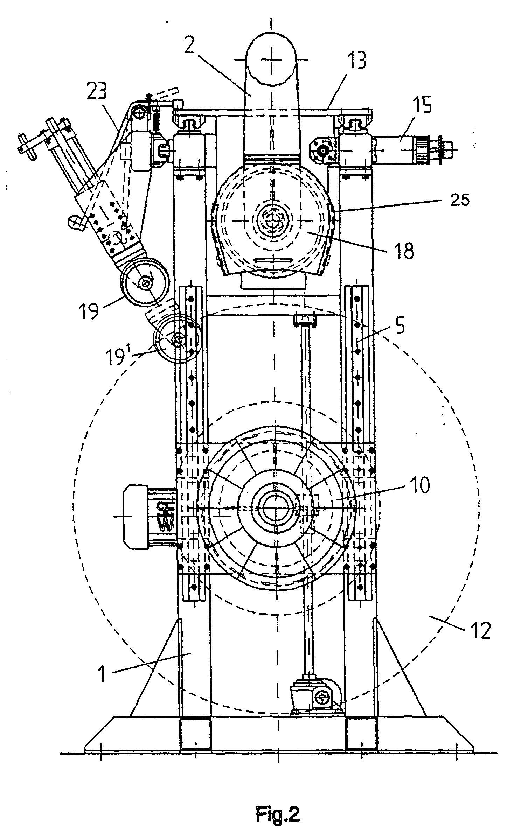

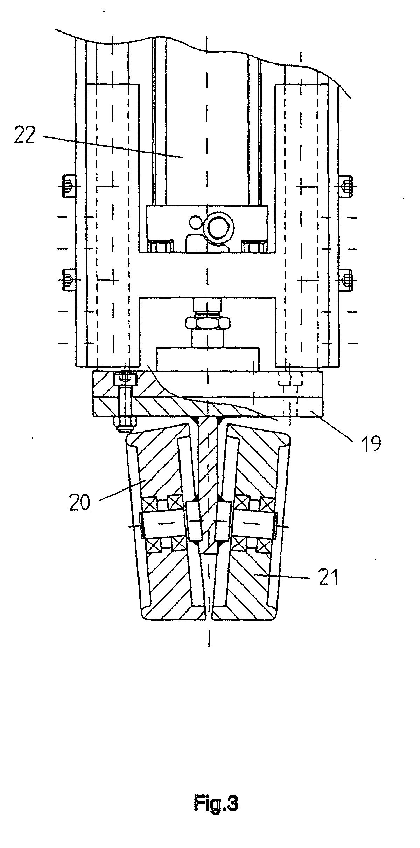

Sur la figure 2, on retrouve le bâti 1 et la potence 2, le mandrin 10 et le pneumatique 12, ainsi que le chariot 13 et les outils de râpage 18. Il est à noter que le capot 25 de protection des outils de râpage 18 est symétrique ce qui permet d'aspirer les particules et poussières dues au râpage quel que soit le sens de rotation des outils 18. Le chariot 13 porte également les organes d'habillage et de rouletage 19 représentés en deux positions 19 et 19¹. Ces organes sont constitués de deux rouleaux coniques 20 et 21 (figure 3) montés sur deux axes concourants formant un angle d'environ 10°, et poussés par un vérin 22 porté par un bloc 23 solidaire du chariot 13. L'angle de 10° correspond simplement au fait qu'avec la géométrie des rouleaux choisis, la surface de contact avec le pneumatique est plane. Le bloc 23 peut être découplé du mouvement du chariot, par exemple lors de la phase de déchapage ou râpage du pneumatique. La pression d'application du vérin 22 peut être modifiée par l'opérateur de la machine en fonction de l'allongement de la bande de roulement nécessaire pour qu'elle recouvre toute la circonférence du pneumatique à rechaper avec une correcte répartition de son poids.

Le profil exact suivant lequel doit être déchapé le pneumatique est introduit dans la machine par une commande numérique électronique (non représentée) qui positionne avec précision les outils et le pneumatique suivant les directions horizontale et verticale grâce aux moteurs pas à pas 15 et 6.

Le fonctionnement de la machine lors du râpage est le suivant. Après avoir introduit dans la commande de la machine le profil de râpage correspondant au type de pneumatique à rechaper et les organes d'application et de rouletage 19 à 23 étant découplés du mouvement du chariot 13 :
- on détermine l'épaisseur résiduelle de gomme au niveau du sommet du pneumatique 12, par exemple en forant un petit trou avec une mèche plate, ce qui n'abîme pas les nappes sommet et on met en mémoire l'épaisseur de gomme à retirer ;
- on monte un pneumatique 12 sur la jante expansible 10, puis on le gonfle par une arrivée d'air comprimé axiale 24, on le met en rotation par le mandrin 3 et le moteur 8;
- on positionne les outils de râpage 18 dans le plan médian du pneumatique et on les met en rotation ;
- on approche l'ensemble pneumatique 12 et mandrin 3 des outils de râpage 18 jusqu'au contact ;
- on met en mémoire la distance entre les outils de râpage 18 et l'axe de rotation du mandrin qui correspond au diamètre initial du pneumatique lors du contact ; cette référence sera utilisée pendant toutes les opérations du rechapage;
- on rapproche, en une ou plusieurs fois, le pneumatique des outils de râpage pour enlever cette épaisseur de gomme et on coordonne les mouvements complémentaires horizontaux du chariot 13 et verticaux du pneumatique 12 pour obtenir le profil de râpage du pneumatique choisi ;
- on arrête et on écarte le pneumatique des outils de râpage ;
- on le démonte et on met en place un autre pneumatique à traiter.

Après leur râpage, les pneumatiques sont usuellement réparés et préparés pour l'application d'une nouvelle bande de roulement sur un ou plusieurs autres postes de travail connus.

Ils sont alors prêts pour l'opération d'habillage sur la machine selon l'invention. Les outils de râpage étant déplacés pour les écarter de l'aplomb du pneumatique et ainsi éviter toute pollution ultérieure due à la chute de particules provenant des outils de râpage :
- on monte à nouveau le pneumatique 12 sur la jante 10 ;
- on termine la préparation si nécessaire en achevant les opérations usuelles de réparation, gommage de la surface du sommet, on applique une gomme de liaison sur le sommet du pneumatique ;
- on prépare une bande de roulement en la coupant à la longueur voulue compte tenu du diamètre initial du pneumatique et de l'épaisseur de gomme enlevée ;
- on enclenche les organes d'application et de rouletage avec le mouvement du chariot 13, on dispose ces organes dans le plan médian du pneumatique et on règle la pression d'application du vérin 22 en fonction de l'allongement de la bande de roulement à obtenir pour couvrir l'ensemble de la circonférence du sommet ;
- on met en place une première extrémité de la bande de roulement sur le sommet du pneumatique en l'engageant sous les rouleaux 20 et 21 ;
- on met en place l'ensemble de la bande de roulement en faisant tourner le mandrin et on vérifie si nécessaire que l'allongement de la bande de roulement est satisfaisant ;
- on règle la pression du vérin 22 à la valeur prévue pour le rouletage ;
- on applique fortement les rouleaux 20 et 21 sur la bande de roulement d'un premier côté puis de l'autre par déplacement du chariot 13 et du mandrin 3 ;
- on arrête la rotation du pneumatique, on le dégonfle et on l'évacue

La machine représentée aux figures 1 3 comporte des outils de râpage dont l'axe de rotation est parallèle à l'axe de rotation du mandrin 3. Pour obtenir la meilleure efficacité du râpage, lors du traitement, les sens de rotation du mandrin et des outils de râpage 18 sont les mêmes. C'est ce qui assure la vitesse tangentielle de contact la plus élevée. Pour assurer une bonne optimisation de l'usure des lames des outils de râpage, tous les trois à dix pneumatiques traités, on inverse les sens de rotation du mandrin 3 et des outils de râpage 18. Le capot 25 symétrique qui entoure les outils de râpage est aussi efficace pour évacuer (avec des moyens d'aspiration non représentés) les particules et poussières créées quel que soit le sens de rotation des outils de râpage. Le nombre de pneumatiques au-delà duquel les sens de rotation sont inversés est programmable. Cela permet de diminuer sensiblement l'usure des outils de râpage et assure une grande facilité d'utilisation de la machine.

Les organes d'application et de rouletage comportent ici deux rouleaux coniques. Ils pourraient aussi n'en comporter qu'un seul. On peut aussi utiliser deux rouleaux avec des moyens pour les écarter progressivement l'un de l'autre de façon symétrique tout en les appliquant fortement contre la surface de la nouvelle bande de roulement.

Les deux mouvements, horizontal et vertical, des deux chariots 4 et 13 sont pilotés par une commande numérique électronique (non représentée) qui assure le suivi du profil exact suivant lequel le pneumatique doit être déchapé.

On voit sur la figure 2 que les outils de déchapage travaillent à la verticale de l'axe du pneumatique, et non pas à l'horizontale comme dans les machines existantes ; cette disposition réduit le coût de la machine et l'espace requis pour son utilisation.

On voit aussi que ce sont les mêmes moyens qui sont utilisés pour déplacer et positionner les outils de déchapage et les organes d'application et de rouletage de la nouvelle bande, ce qui économise un ensemble moto-réducteur et de la place au sol.

Enfin, les mêmes paramètres de positionnement précis sont utilisés pour le déchapage et pour le rechapage, c'est-à-dire que la cote initiale de rechapage est sensiblement identique à la cote finale du déchapage. Ainsi, l'invention apporte une nouvelle disposition judicieuse des différentes parties de la machine, pour en réduire le coût et en faciliter l'utilisation.

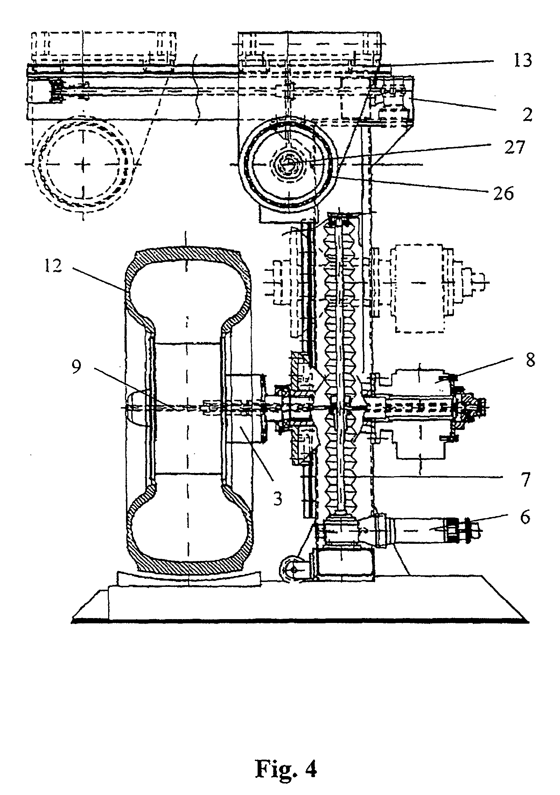

La figure 4 présente une variante de réalisation d'une machine selon l'invention. Selon cette variante, les outils de râpage 26 ont leur axe de rotation 27 disposé perpendiculairement à l'axe de rotation 9 du mandrin 3. Ces outils de râpage sont aussi portés par le chariot 13 et on distingue sur la figure 4 les positions extrêmes de déplacement de ces outils 26 de part et d'autre du plan médian du pneumatique 12. Cette disposition permet de traiter toutes les parties du sommet et des épaules des pneumatiques par combinaison des mouvements vertical du mandrin 3 et horizontal des outils de râpage 26.

## Revendications

1. Machine destinée au rechapage de pneumatiques comprenant un premier chariot (4) guidé dans des premiers rails (5) et mu par un premier moteur (6), un mandrin (3) rotatif monté sur ledit premier chariot (4), un second chariot (13) guidé dans des seconds rails horizontaux (14) orientés parallèlement à l'axe de rotation dudit mandrin (3) et perpendiculairement audits premiers rails (5), ledit second chariot (13) étant mu par un second moteur (15), des outils de râpage (18) portés par ledit second chariot (13), et des moyens pour positionner avec précision le premier chariot relativement au second chariot seulement par la combinaison des deux mouvements de translation desdits premier (4) et second (13) chariots, **caractérisée en ce que** lesdits premiers rails sont verticaux, **en ce que** ledit second chariot (13) est disposé au-dessus dudit premier chariot (4) et **en ce que** ladite machine comporte en plus, portés par ledit second chariot (13), des organes (19-23) d'application d'une bande de roulement et des organes (19-23) de rouletage de ladite bande de roulement après son application.

2. Machine selon la revendication 1, comportant des moyens (23) pour découpler la position des organes (19-23) d'application et de rouletage du mouvement dudit second chariot (13).

3. Machine selon l'une des revendications 1 et 2, dans laquelle les organes (19-23) d'application d'une bande de roulement et les organes (19-23) de rouletage sont les mêmes.

4. Machine selon l'une des revendications 1 à 3, comportant des moyens pour inverser le sens de rotation desdits outils de râpage (18).

5. Machine selon la revendication 4, comportant des moyens pour paramétrer le nombre de pneumatiques traités au-delà duquel le sens de rotation des outils de râpage (18) est inversé.

6. Machine selon la revendication 5, dans laquelle le nombre de pneumatiques est de l'ordre de trois à dix.

7. Machine selon l'une des revendications 1 à 6, dans laquelle l'axe de rotation desdits outils de râpage (18) est orienté perpendiculairement à l'axe de rotation dudit mandrin (3).

8. Machine selon l'une des revendications 1 à 6, dans laquelle l'axe de rotation desdits outils de râpage (18) est orienté parallèlement à l'axe de rotation dudit mandrin (3).

9. Machine selon la revendication 8, comportant en plus des moyens pour inverser le sens de rotation dudit mandrin et pour commander en même temps l'inversion des sens de rotation desdits outils de râpage (18) et dudit mandrin (3).

10. Machine selon l'une des revendications 1 à 9, dans laquelle les outils de râpage (18) sont protégés par un capot (25) symétrique.

11. Machine destinée au rechapage de pneumatiques comprenant un mandrin (3) rotatif sur lequel est monté le pneumatique (11, 12) à traiter, des organes (19-23) d'application d'une bande de roulement et des organes (19-23) de rouletage de ladite bande de roulement après son application, **caractérisée en ce que** le mandrin (3) est monté sur un premier chariot (4) guidé dans des rails verticaux (5) et mu par un premier moteur (6), **en ce que** les organes (19-23) d'application d'une bande de roulement et les organes (19-23) de rouletage de ladite bande de roulement après son application sont portés par un second chariot (13) guidé dans des rails horizontaux (14) orientés parallèlement à l'axe de rotation dudit mandrin (3) et mu par un second moteur (15) et **en ce que** des moyens sont prévus pour positionner avec précision le premier chariot relativement au second chariot.

12. Machine selon la revendication 11, dans laquelle ledit second chariot (13) est disposé au-dessus dudit premier chariot (4).

13. Machine selon l'une des revendications 11 ou 12, dans laquelle les organes (19-23) d'application d'une bande de roulement et les organes (19-23) de rouletage sont les mêmes.

## Claims

1. A machine for retreading tyres, comprising a first carriage (4) guided in first rails (5) and moved by a first motor (6), a rotary chuck (3) mounted on said first carriage (4), a second carriage (13) guided in horizontal second rails (14) oriented parallel to the axis of rotation of said chuck (3) and perpendicular to said first rails (5), said second carriage (13) being moved by a second motor (15), buffing tools (18) borne by said second carriage (13), and means for precisely positioning the first carriage relative to the second carriage solely by combining the two translational movements of said first (4) and second (13) carriages, **characterised in that** said first rails are vertical, **in that** said second carriage (13) is arranged above said first carriage (4) and **in that** said machine further comprises, borne by said second carriage (13), means (19-23) for applying a tread and means (19-23) for rolling down said tread after its application.

2. A machine according to Claim 1, comprising means (23) for uncoupling the position of the means (19-23) for application and the means for rolling down from the movement of said second carriage (13).

3. A machine according to one of Claims 1 and 2, in which the means (19-23) for application of a tread and the rolling-down means (19-23) are the same.

4. A machine according to one of Claims 1 to 3, comprising means for reversing the direction of rotation of said buffing tools (18).

5. A machine according to Claim 4, comprising means for setting the parameters of the number of tyres treated after which the direction of rotation of the buffing tools (18) is reversed.

6. A machine according to Claim 5, in which the number of tyres is of the order of three to ten.

7. A machine according to one of Claims 1 to 6, in which the axis of rotation of said buffing tools (18) is oriented perpendicular to the axis of rotation of said chuck (3).

8. A machine according to one of Claims 1 to 6, in which the axis of rotation of said buffing tools (18) is oriented parallel to the axis of rotation of said chuck (3).

9. A machine according to Claim 8, further comprising means for reversing the directions of rotation of said chuck and for at the same time controlling the reversal of the direction of rotation of said buffing tools (18) and said chuck (3).

10. A machine according to one of Claims 1 to 9, in which the buffing tools (18) are protected by a symmetrical cover (25).

11. A machine for retreading tyres comprising a rotary chuck (3) on which the tyre (11, 12) to be treated is mounted, means (19-23) for application of a tread or a tyre and means (19-23) for rolling down said tread after its application, **characterised in that** the chuck (3) is mounted on a first carriage (4) guided in vertical rails (5) and moved by a first motor (6), **in that** the means (19-23) for application of a tread and the means (19-23) for rolling down said tread after its application are borne by a second carriage (13) guided in horizontal rails (14) oriented parallel to the axis of rotation of said chuck (3) and moved by a second motor (15) and **in that** means are provided for precisely positioning the first carriage relative to the second carriage.

12. A machine according to Claim 11, in which said second carriage (13) is located above said first carriage (4).

13. A machine according to one of Claims 11 or 12, in which the means (19-23) for application of a tread and the rolling-down means (19-23) are the same.

## Patentansprüche

1. Maschine, die zum Runderneuern von Reifen bestimmt ist und einen ersten Schlitten (4), der in ersten Schienen (5) geführt ist und durch einen ersten Motor (6) bewegt wird, einen drehbaren Dorn (3), der auf dem genannten, ersten Schlitten (4) angebracht ist, einen zweiten Schlitten (13), der in zweiten, horizontalen Schienen (14) geführt ist, die parallel zur Drehachse des genannten Dorns (3) und senkrecht zu den genannten ersten Schienen (5) ausgerichtet sind, wobei der genannte zweite Schlitten (13) durch einen zweiten Motor (15) bewegt wird, Raspelwerkzeuge (18), die vom genannten zweiten Schlitten (13) getragen sind, und Mittel zum genauen Positionieren des ersten Schlittens in Bezug auf den zweiten Schlitten alleine durch Kombination der beiden Translationsbewegungen des genannten ersten (4) und zweiten (13) Schlittens aufweist, **dadurch gekennzeichnet, daß** die genannten ersten Schienen vertikal sind, daß der genannte zweite Schlitten (13) über dem genannten ersten Schlitten (4) angeordnet ist, und daß die genannte Maschine außerdem, von dem genannten zweiten Schlitten (13) getragen, Organe (19 - 23) zum Auftrag einer Lauffläche und Organe (19 - 23) zum Festwalzen der genannten Lauffläche nach ihrem Auftrag aufweist.

2. Maschine nach Anspruch 1, mit Mitteln (23) zum Entkoppeln der Position der Organe (19 - 23) zum Auftrag und zum Festwalzen von der Bewegung des genannten, zweiten Schlittens (13).

3. Maschine nach einem der Ansprüche 1 und 2, worin die Organe (19 - 23) zum Auftrag einer Lauffläche und die Organe (19 - 23) zum Festwalzen die selben sind.

4. Maschine nach einem der Ansprüche 1 bis 3, mit Mitteln zum Umkehren der Drehrichtung der genannten Raspelwerkzeuge (18).

5. Maschine nach Anspruch 4, mit Mitteln zum Versehen der Anzahl von behandelten Reifen, jenseits der die Drehrichtung der Raspelwerkzeuge (18) umgekehrt wird, mit einem Kennwert.

6. Maschine nach Anspruch 5, worin die Anzahl der Reifen in der Grössenordnung von drei bis sechs liegt.

7. Maschine nach einem der Ansprüche 1 bis 6, worin die Drehachse der genannten Raspelwerkzeuge (18) senkrecht zur Drehachse des genannten Dorns (3) ausgerichtet ist.

8. Maschine nach einem der Ansprüche 1 bis 6, worin die Drehachse der genannten Raspelwerkzeuge (18) parallel zur Drehachse des genannten Dorns (3) ausgerichtet ist.

9. Maschine nach Anspruch 8, außerdem mit Mitteln zur Drehrichtungsumkehr des genannten Dorns und zum gleichzeitigen Ansteuern der Drehrichtungsumkehr der genannten Raspelwerkzeuge (18) und des genannten Dorns (3).

10. Maschine nach einem der Ansprüche 1 bis 9, worin die genannten Raspelwerkzeuge (18) durch eine symmetrische Haube (25) geschützt sind.

11. Maschine, die zur Runderneuerung von Reifen bestimmt ist und einen drehbaren Dorn (3), auf dem der zu behandelnde Reifen (11, 12) montiert wird, Organe (19 - 23) zum Auftrag einer Lauffläche und Organe (19 - 23) zum Festwalzen der genannten Lauffläche nach ihrem Auftrag aufweist, **dadurch gekennzeichnet, daß** der Dorn (3) auf einem ersten Schlitten (4) angebracht ist, der durch vertikale Schienen (5) geführt und durch einen ersten Motor (6) bewegt wird, daß die Organe (19 - 23) zum Auftrag einer Lauffläche und die Organe (19 - 23) zum Festwalzen der genannten Lauffläche nach ihrem Auftrag von einem zweiten Schlitten (13) getragen sind, der in horizontalen Schienen (14) geführt ist, die parallel zur Drehachse des genannten Dorns (3) ausgerichtet und von einem zweiten Motor (15) bewegt sind, und daß Mittel vorgesehen sind, um den ersten Schlitten relativ zum zweiten Schlitten genau zu positionieren.

12. Maschine nach Anspruch 11, worin der genannten zweite Schlitten (13) über dem genannten ersten Schlitten (4) angeordnet ist.

13. Maschine nach einem der Ansprüche 11 oder 12, worin die Organe (19 - 23) zum Auftrag einer Lauffläche und die Organe (19 - 23) zum Festwalzen die selben sind.
